(19) Europäisches Patentamt
European Patent Office
Office européen des brevets

(11) **EP 1 852 591 A2**

(12) **EUROPEAN PATENT APPLICATION**

(43) Date of publication:
**07.11.2007 Bulletin 2007/45**

(51) Int Cl.:
**F02C 9/28** (2006.01)

(21) Application number: **07103520.8**

(22) Date of filing: **05.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **05.05.2006 US 381821**

(71) Applicant: **General Electric Company Schenectady, NY 12345 (US)**

(72) Inventors:
• **Brown, Harold**
  **Mason, OH 45040 (US)**
• **Desai, Premai**
  **Mason, OH 45040 (US)**

(74) Representative: **Illingworth-Law, William Illingworth**
  **GE International Inc.**
  **London Patent Operation**
  **15 John Adam Street**
  **London WC2N 6LU (GB)**

(54) **Apparatus for estimating engine thrust**

(57)    An apparatus for estimating engine thrust is provided. The apparatus includes a processor coupled to the engine for receiving input from the plurality of sensors. The processor programmed to: obtain information from the engine during a first operating condition, update information from the engine during a second operating condition, and generate engine thrust estimates utilizing the obtained information and the updated information and implementing direct thrust control.

FIG. 1

**Description**

BACKGROUND OF THE INVENTION

This invention relates generally to aircraft engines and more particularly, to methods and apparatus for estimating engine thrust.

Engine thrust cannot be measured directly in flight. Since engine thrust cannot be measured, known engines are indirectly controlled via a measurable parameter (such as fan speed or engine pressure ratio, which are good indicators of thrust) in order to meet a specific thrust demand. Each of the available known thrust indicators may, however, be subject to errors due to random variations in engine-to-engine component quality, deterioration, engine sensor errors and actuator position errors. On the other hand, if engine thrust could be estimated accurately, then engine thrust demands could be met precisely through direct thrust control.

To estimate engine thrust, it is known to use control mode studies to identify useful control modes, or controlled parameters, which are least sensitive to the random effects of engine-to-engine quality variations, engine deterioration, engine sensor errors and actuator position errors. The selected control modes are then analyzed to determine the 2-sigma variations due to the above effects. Because engine thrust-HP turbine temperature distribution is Bivariate Normal, a fan speed bias on thrust may be identified and added to the nominal control schedules used for all engines, such that the lowest 2-sigma thrust engine may meet, or exceed, rated thrust. As a result, higher thrust engines can be over-boosted by typically 2-4% in thrust, for example, and operated typcially at increased turbine temperatures such as, for example 120˚F on commercial engines and/or 160˚F on military engines, hotter than nominal. Engine specific fuel consumption and engine life will both be affected adversely by the over-boost.

Algorithms for tracking engine parameters are sometimes referred to herein as filters, and may provide estimates of engine component flows and efficiencies. At least some known filters do not consider information from more than one operating point simultaneously, and as such, the number of parameters estimated is equal to the number of sensors. Since the number of sensors is usually less than the number of parameters to be estimated, such filters combine the effect of several parameters into a few parameters, which inhibits individually tracking each parameter. Known filters include for example steady-state tracking filters or dynamic tracking filters which use for example, Kalman filters, and/or least-squares estimators. Known nonlinear estimation filters include neural networks and/or fuzzy rule-based systems.

BRIEF DESCRIPTION OF THE INVENTION

In one aspect, a method for estimating engine thrust is provided. The method includes obtaining information about an initial dynamic state of the engine and updating the information about the initial dynamic state of the engine to reflect a second dynamic state of the engine. The method also includes generating engine thrust estimates, wherein the thrust estimates facilitate implementing direct thrust control.

In another aspect, an apparatus for estimating engine thrust is provided. The apparatus includes a processor coupled to the engine for receiving input from the plurality of sensors. The processor is programmed to obtain information from the engine during a first operating condition and update information from the engine during a second operating condition. The process is also programmed to generate engine thrust estimates utilizing the obtained information and the updated information and implementing direct thrust control.

In a further aspect, a system for controlling a gas turbine engine is provided. The system includes at least one model capable of representing a system behavior and at least one thrust estimator capable of estimating engine thrust.

BRIEF DESCRIPTION OF THE DRAWINGS

Embodiments of the present invention will now be described, by way of example only, with reference to the accompanying drawings, in which:

Figure 1 is an exemplary plot of thrust estimation error (in %) versus T41 estimation error (also in %);

Figure 2 is an exemplary plot of actual thrust (in %) versus actual T41 (in ˚F) for a multi-variable control based on closed-loop control of fan speed, core engine pressure ratio, and liner engine pressure ratio; and

Figure 3 is an exemplary plot of actual thrust (in %) against actual T41(in ˚F) for multi-variable control with fan speed replaced by estimated thrust.

DETAILED DESCRIPTION OF THE INVENTION

Known thrust estimators use the available engine to estimate engine thrust and permit engine operation at estimated thrust rather than at a thrust indicator, such as fan speed or engine pressure ratio. It is possible to achieve thrust estimation errors which are substantially smaller than the thrust uncertainties associated with operation at fan speed or engine pressure ratio. This can lead to a substantial reduction in the over-boost and over-temperatures of conventional engine operation.

A Kalman Filter is an optimal estimation algorithm that accurately estimates system "states", in the presence of modeling uncertainties and output measurement errors. In this invention, a Kalman Filter has been derived for optimal thrust estimation using the engine thrust (Fn) and HP Turbine Inlet Temperature (T41) as system states.

The Thrust Estimator has been derived from a linear state-space model of the engine at a specific engine operating condition:

$$\begin{bmatrix} \dot{\mathbf{X}} \\ \mathbf{Y} \end{bmatrix} = \begin{bmatrix} \mathbf{A} & \mathbf{B} \\ \mathbf{C} & \mathbf{D} \end{bmatrix} \begin{bmatrix} \mathbf{X} \\ \mathbf{U} \end{bmatrix} \tag{1}$$

where $\mathbf{X}$ is the state vector, $\mathbf{U}$ is the control vector, $\mathbf{Y}$ is the output vector, $\dot{\mathbf{X}}$ is the state dynamic vector and $\mathbf{A, B, C,}$ **and D** are partial derivative matrices.

Partial derivative matrices are generated from a nonlinear, physics based engine model (such as a Cycle Workstation or CWS model), with rotor speeds $n_1$ and $n_2$ as system states. The speed states must be then replaced by Fn and T41 which are the states to be estimated. This is achieved by a row-column transformation between the states ($n_1$ and $n_2$) and the output rows for Fn and T41. Fn and T41 dynamics were then added by differentiating rows for $n_1$ and $n_2$, equating the result to the existing $n_1$ dot and $n_2$ dot equations from the $\dot{\mathbf{X}}$ equation, and solving for Fndot and T41 dot.

The resulting matrix equation was then expanded to include the effects of component variations, actuator position errors, and engine sensor output errors:

$$\begin{bmatrix} \dot{\mathbf{X}} \\ \mathbf{Y} \end{bmatrix} = \begin{bmatrix} \mathbf{A} & \mathbf{B} & \mathbf{G} & \mathbf{0} \\ \mathbf{C} & \mathbf{D} & \mathbf{H} & \mathbf{I} \end{bmatrix} \begin{bmatrix} \mathbf{X} \\ \mathbf{U} \\ \mathbf{V} \\ \mathbf{W} \end{bmatrix} \tag{2}$$

where $\mathbf{X}$ is the new state vector, $\mathbf{V}$ is the variational effect vector which includes engine component effects (such as airflow and efficiency variations) and actuator position errors. $\mathbf{W}$ is the sensor error vector, and $\mathbf{G}$ and $\mathbf{H}$ are additional partial derivative matrices. $\mathbf{I}$ is an identity matrix.

Deterioration was then added as a third state with no significant dynamics assuming that it did not change over a single flight. Note that equation (2) is typically a matrix equation containing 10-15 rows and 50-60 columns.

Equation (2) can then be used in a Kalman Filter approach for estimating Fn and T41. The Estimator uses a state estimation error covariance matrix $\mathbf{P}$ in calculating the filter gain $\mathbf{M}$. Good results have been achieved with the following initial matrix:

$$\mathbf{P} = \begin{bmatrix} .15 & 0 & 0 \\ 0 & .15 & 0 \\ 0 & 0 & .15 \end{bmatrix} \tag{3}$$

P will be updated during the thrust estimation process.

Two weighting matrices are also needed: R and Q. They are obtained from:

$$R = \text{diag}\left[\sigma s1^2, \sigma s2^2, ....\sigma sn^2\right]$$
$$Q = \text{diag}\left[\sigma v1^2, \sigma v2^2, ....\sigma vn^2\right] \tag{4}$$

where $\sigma sn^2$ are the variances of each engine sensor error and $\sigma vn^2$ are the variances of each component engine-to-engine quality variation and each actuator position error.

The estimation process requires two updates during each time step. The first update represents a measurement update which utilizes the changes in the output vector **Y** from the previous time step. A filter gain must first be computed from:

$$M = P * C^T /(R + C * P * C^T) \tag{5}$$

The state updates can then be determined from:

$$X_m = X_t + M * (Y_m - C * X_t - D * U_m) \tag{6}$$

where $X_t$ is the state estimate from the previous time step, $U_m$ is the change in the control vector from the previous time step, $Y_m$ is the change in the output vector from the previous time step, and $X_m$ is the new state estimate. It also includes an update of the state error covariance matrix for use in the next time update:

$$PP = (I - M * C) * P \tag{7}$$

The second update represents a time update. It uses the changes in control inputs and the estimated state updates from the measurement update for revised state estimates:

$$X_t = X_m + (A * X_m + B * U_t) * dt \tag{8}$$

where $U_t$ is the change in the control vector from the previous time step, **dt** is the time step, and $X_t$ is the new state update. The state error covariance matrix is also updated for use in the next measurement update:

$$P = A * PP * A^T + C * Q * C^T \tag{9}$$

The above process is repeated recursively from Equations 5 through 9 for each successive time step.
The thrust estimator has been tested on a model of the JSF Engine in the CTOL operating mode. Initial testing has included linear simulations for both steady-state and transient operation at sea level static operating conditions. The steady-state testing has involved a Monte Carlo study of 800 random engines with eighteen component performance parameters (flows, efficiencies, parasitic flows, etc.) assumed to be normally distributed, seven control inputs (cepr, lepr, vabi, etc.) with position errors assumed to be normally distributed, and eleven engine sensors (speeds, temperatures, and pressures) assumed to be normally distributed. Component deterioration was assumed to be uniformly distributed from no deterioration (new engine) to 100% (fully deteriorated).

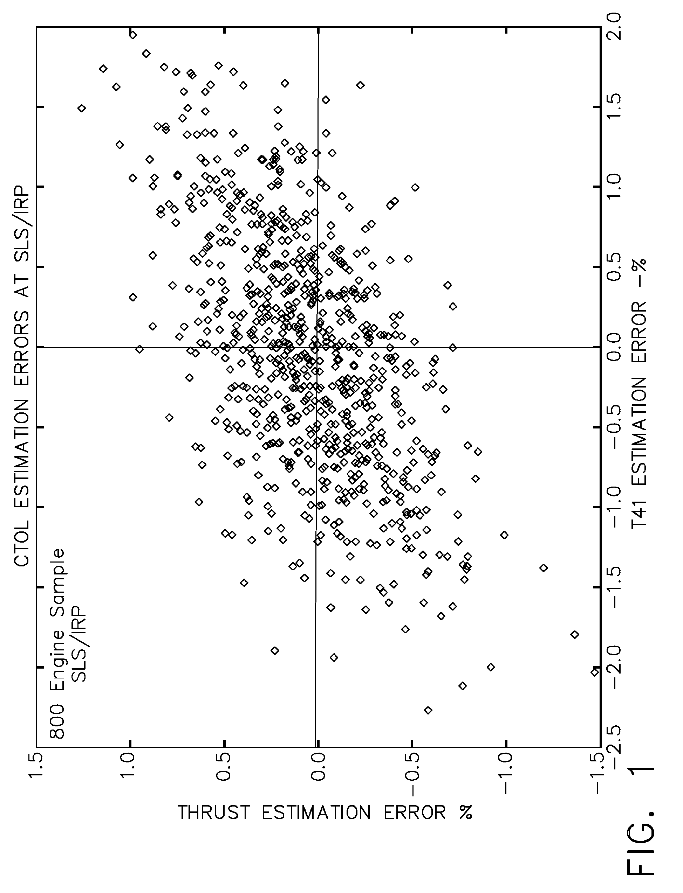

Figure 1 illustrates exemplary results of the Monte Carlo study. It illustrates the thrust estimation error (in %) versus T41 estimation error (also in %) for all 800 engines. Note that there is relatively little correlation between the thrust and T41 errors indicating the thrust estimator did an acceptable job of estimation. A statistical analysis of the results produced the following:

Table 1 Steady-State Estimation Errors

| | Thrust | T41 |
|---|---|---|
| Mean Error | 0.045% | -0.026% |
| Standard Deviation | 0.382% | 0.772% |

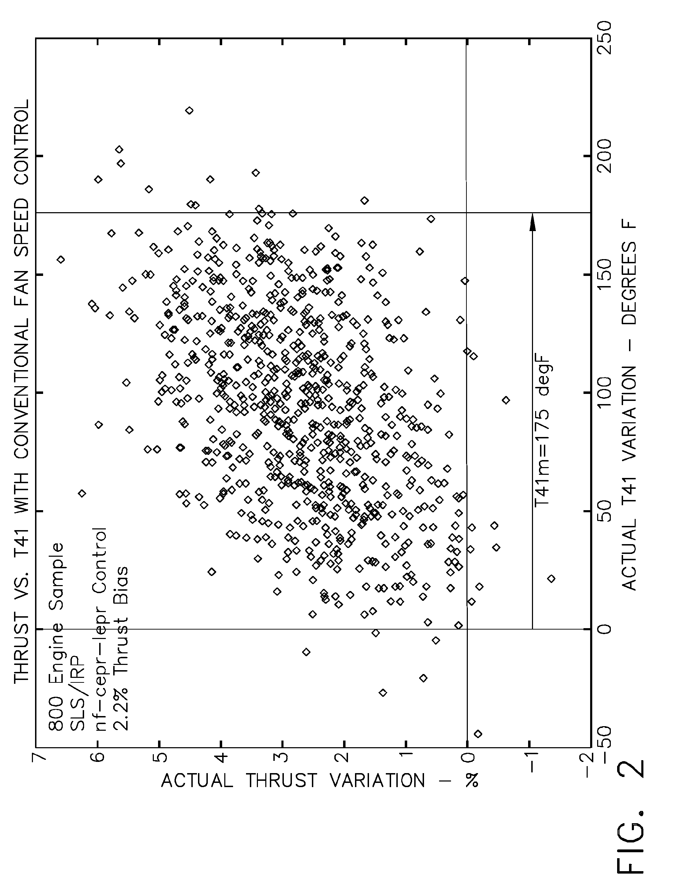

Figure 2 illustrates an exemplary plot of a similar 800 engine sample for the nominal control mode of fan speed, cepr, and lepr. It shows actual thrust variation from nominal (in %) against actual T41 variation (in ˚F). Fan speed demand has been biased by the 2-sigma variation in thrust at fan speed ($\pm$ 3%) in order to meet, or exceed, nominal thrust on 98.5% of the 800 engine sample (all but 12 engines). The hottest 98.5% engine would be running 175 ˚F hotter than nominal.

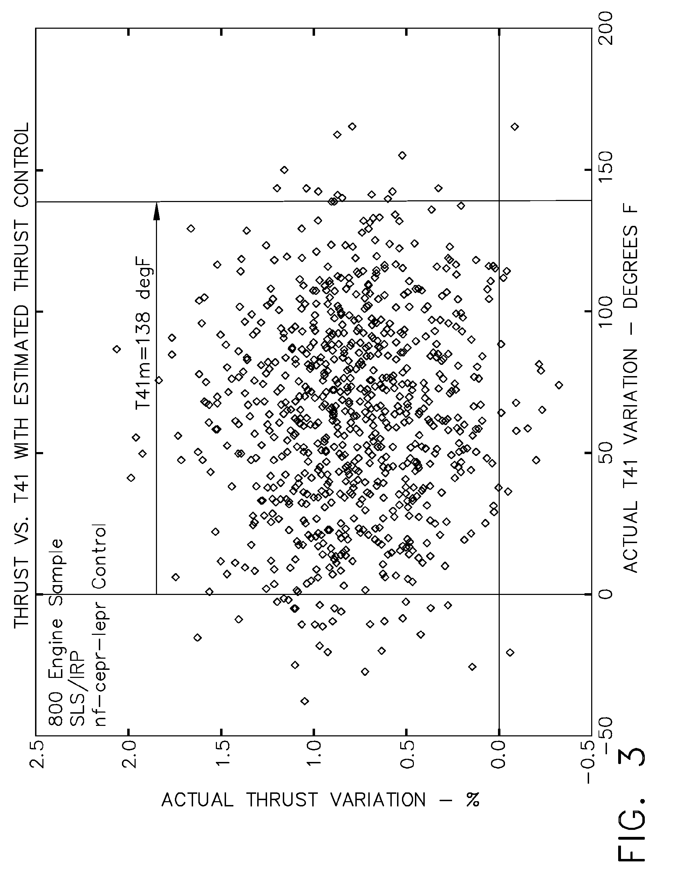

Figure 3 illustrates a similar plot of actual thrust vs. actual T41 for an 800 engine sample in which fan speed has been replaced by estimated thrust. The Estimator reduces the thrust uncertainty from $\pm$ 3% at fan speed to $\pm$0.65% at estimated thrust. This reduces the bias necessary to assure that 98.5% of the engine population meets or exceeds nominal thrust. Maximum T41 will be reduced accordingly to 138 ˚F (a reduction of about 37˚F or 21%). This will lead to corresponding reductions in operating temperatures at maximum power, turbine cooling requirements, and cruise SFC. It should also increase engine hot section life. Temperature margin requirements for a fixed nozzle commercial engine using fan speed would be somewhat smaller and the improvement for using estimated thrust would be correspondingly less.

Transient testing used the linear engine model (LEM) to simulate a deteriorated engine transient from IRP to idle. The thrust estimator (which is a linear estimator) tracked both thrust and T41 over the complete transient. Thrust and temperature estimation errors were extremely small indicating that the linear implementation was correct.

The above described estimation of engine thrust enables accurate estimation of engine thrust such that the engine thrust demand can be met more precisely through direct thrust control. In addition, such estimation is believed to facilitate reducing over-boosting and engine operation temperatures.

While the invention has been described in terms of various specific embodiments, those skilled in the art will recognize that the invention can be practiced with modification within the spirit and scope of the claims.

**Claims**

1. An apparatus for estimating engine thrust, said apparatus comprising a processor coupled to the engine for receiving input from the plurality of sensors, said processor programmed to:

    obtain information from the engine during a first operating condition;
    update information from the engine during a second operating condition; and
    generate engine thrust estimates utilizing the obtained information and the updated information and implementing direct thrust control.

2. An apparatus in accordance with Claim 1 wherein to obtain information from the engine comprises obtaining information about at least one of an engine system, an actuator, and a sensor.

3. An apparatus in accordance with Claim 1 wherein to update the information further comprises updating at least one of a dynamic performance state, a control input, a variable, a component variable, an equipment position error, an equipment sensor output error, a parameter, a performance parameter, a quality parameter, a scalar, an adder, a constraint, an objective function, a limit, an adaptable parameter during steady state operation, and an adaptable parameter during transient operation.

4. An apparatus in accordance with Claim 1 wherein to update the information further comprises updating the information using engine thrust as a first system state and high pressure turbine inlet temperature as a second system state.

5. An apparatus in accordance with Claim 1 wherein to generate engine thrust estimates further comprises generating engine thrust estimates using at least one of a Kalman filter, a linear estimator, a non-linear estimator, a linear state estimator, a non-linear state estimator, a linear parameter estimator, a non-linear parameter estimator, a linear filter, a non-linear filter, a linear tracking filter, a non-linear tracking filter, linear logic, non-linear logic, linear heuristic logic, non-linear heuristic logic, linear knowledge base, and non-linear knowledge base.

6. An apparatus in accordance with Claim 1 wherein to generate engine thrust estimates further comprises generating engine thrust estimates using an engine thrust as a first system state and a high pressure turbine inlet temperature as a second system state, and to obtain outputs at the first system state linearly independently of the second system state.

7. An apparatus in accordance with Claim 6 wherein to obtain outputs further comprises weighting the outputs with respect to at least one of an engine sensor error, a variance of each component engine-to-engine quality variation, and an actuator position error.

8. A system for controlling a gas turbine engine, said system comprising:

   at least one model capable of representing a system behavior; and
   at least one thrust estimator capable of estimating engine thrust.

9. A system in accordance with Claim 8 wherein said system behavior comprises at least one of a steady-state behavior and a transient behavior.

10. A system in accordance with Claim 8 wherein said system is configured to transform a conventional thrust estimator based on low pressure and high pressure rotor speeds to a dynamic thrust estimator based on dynamic states such as engine thrust and high pressure turbine inlet temperature.

CTOL ESTIMATION ERRORS AT SLS/IRP

800 Engine Sample
SLS/IRP

THRUST ESTIMATION ERROR %

T41 ESTIMATION ERROR —%

FIG. 1

EP 1 852 591 A2

FIG. 2

EP 1 852 591 A2

THRUST VS. T41 WITH ESTIMATED THRUST CONTROL

800 Engine Sample
SLS/IRP
nf-cepr-lepr Control

T41m=138 degF

ACTUAL THRUST VARIATION – %

ACTUAL T41 VARIATION – DEGREES F

FIG. 3

EP 1 852 591 A2